# EUROPÄISCHE PATENTSCHRIFT

(11) **EP 3 821 478 B1**
(45) Veröffentlichungstag und Bekanntmachung des Hinweises auf die Patenterteilung: **01.06.2022**
(21) Anmeldenummer: 19741983.1
(22) Anmeldetag: 05.07.2019
(51) Int. Cl.: H01M 50/24, H01M 50/20

(54) **BATTERIEGEHÄUSE**
BATTERY HOUSING
BOÎTIER DE BATTERIE

(30) Priorität: 11.07.2018 DE 102018211471
(43) Veröffentlichungstag der Anmeldung: 19.05.2021
(73) Patentinhaber: Audi AG, 85045 Ingolstadt (DE)
(72) Erfinder: KÜHL, Sönke, 69221 Dossenheim (DE); STEGMAIER, Jürgen, 71737 Kirchberg (DE); ERNST, Michael, 71543 Wüstenrot (DE); FOTH, Johannes, 85077 Manching (DE)
(86) Internationale Anmeldenummer: PCT/EP2019/068168
(87) Internationale Veröffentlichungsnummer: WO 2020/011680

(56) Entgegenhaltungen:
- EP-A1- 3 382 774
- DE-A1-102017 100 612

## Beschreibung

Die Erfindung betrifft ein Batteriegehäuse umfassend einen Deckelabschnitt und einen Bodenabschnitt, die einen Aufnahmeraum für einen oder mehrere Energiespeicher begrenzen, sowie einen Unterfahrschutz, der unterhalb des Bodenabschnitts angeordnet ist, wobei der Deckelabschnitt, der Bodenabschnitt und der Unterfahrschutz über eine oder mehrere Befestigungseinrichtungen miteinander verbunden sind, wobei die oder jede Befestigungseinrichtung eine zwischen Deckelabschnitt und Bodenabschnitt angeordnete Hülse mit einer Längsbohrung sowie ein durch die Längsbohrung geführtes Befestigungselement mit einem Schaft und einem an einer Seiten ausgebildeten Widerlagerkopf umfasst.

Derartige Batteriegehäuse kommen beispielsweise zur Herstellung von Energiespeichern für Kraftfahrzeuge zum Einsatz. Ein solches Batteriegehäuse umfasst üblicherweise einen Deckel mit einem Deckelabschnitt und beispielsweise eine Batteriewanne mit einem Bodenabschnitt und daran angrenzenden Seitenwänden, wobei der Deckel an der Batteriewanne randseitig befestigt wird, wozu zumeist Randflansche durchsetzende Verbindungsschrauben dienen. Der Deckel und die Batteriewanne begrenzen einen Aufnahmeraum, in dem ein oder üblicherweise mehrere Energiespeicher aufgenommen sind.

Zur Verbindung des Deckels und des Bodenabschnitts dienen mehrere Befestigungseinrichtungen, wobei jede Befestigungseinrichtung eine zwischen dem Deckelabschnitt und dem Bodenabschnitt angeordnete Hülse mit einer Längsbohrung sowie ein durch die Längsbohrung geführtes Befestigungselement, üblicherweise eine Verbindungsschraube, mit einem Schaft, zumeist einem Gewindeschaft, und einem an einer Seite ausgebildeten Widerlagerkopf umfasst. Es können einzelne Hülsen verwendet werden, aber auch längliche, stegartige Hülsenbauteile mit entsprechenden Längsbohrungen, die in Längs- und/oder Querrichtung der Gehäuselängsachse im Aufnahmeraum verlaufen und diesen zugleich in entsprechende Aufnahmeabschnitte unterteilen, in denen dann die Energiespeichermodule aufgenommen sind. Ein Beispiel für eine solche Befestigung ist aus DE 10 2016 214 289 A1 bekannt. Dort ist zur Beabstandung von Deckel und Boden eine Strebe vorgesehen, mit einer Längsbohrung, in die eine zusätzliche Hülse eingesetzt ist. Die Strebe ist einerseits bodenseitig, andererseits deckelseitig befestigt. Durch die Hülse wird eine Verbindungsschraube geschoben, die mit ihrem Schraubenkopf an der Hülse, die mit einer Schulter in der Strebenbohrung, also der Längsbohrung, abgestützt ist, aufgelagert ist. Die Verbindungsschraube ragt aus der Strebe respektive Hülse am anderen Ende heraus kann und zur Montage des Batteriegehäuses an einer Karosserie durch eine entsprechende Durchbrechung in der Karosserie geführt werden, wo eine Hohlschraube aufgeschraubt wird, so dass eine feste Montage möglich ist.

Da mittels des Befestigungselement die Befestigung des Batteriegehäuses an der Karosserie erfolgt, sind demzufolge eine Vielzahl an separaten Befestigungs- oder Karosseriedurchschraubpunkten gegeben. Die Karosserie ist in geeigneter Weise gegen ein Eindringen von Feuchtigkeit oder Ähnlichem zu schützen.

Aus DE 10 2015 204 841 A1 ist ein Befestigungsaufbau für einen elektrischen Energiespeicher bekannt, mit einer Vielzahl von Energiespeichermodulen, die in mehreren Reihen angeordnet ist, so dass ein länglicher Hohlraum zwischen den benachbarten Reihen ausgebildet wird. Der Hohlraum weist zwischen zwei sich gegenüberliegenden Energiespeichermodulen aus benachbarten Reihen einen Querschnitt auf, der auf zwei gegenüberliegenden Seiten von jeweiligen Abschlussplatten der sich gegenüberliegenden Energiespeichermodule begrenzt wird, auf einer weiteren Seite von einer die Energiespeichermodule tragenden Tragestruktur begrenzt wird und auf einer weiteren Seite von einem Versteifungselement begrenzt wird. Das Versteifungselement verbindet die beiden den Hohlraum begrenzenden Abschlussplatten starr miteinander.

DE 10 2016 214 289 A1 offenbart ein Fahrzeug mit einem Hochvoltspeicher, der ein Gehäuse mit einem Boden und mehreren von dem Boden abstehenden Seitenwänden sowie einen Deckel aufweist, sowie mindestens eine Strebe, die im Gehäuseinneren angeordnet ist und zwei Seitenwände verbindet. Es ist ein Durchgangsloch vorgesehen, welches sich durch den Boden, die Strebe und den Deckel erstreckt, wobei der Hochvoltspeicher durch ein sich durch das Durchgangsloch hindurch erstreckendes Verbindungselement mit einem Karosseriestrukturteil verbunden ist.

Schließlich ist aus DE 2015 007 960 A1 ein Batteriegehäuse bekannt, mit wenigstens einem Bodenbereich und einem Deckelbereich zum Abgrenzen wenigstens eines Aufnahmeraums für wenigstens eine Batterie gegenüber der Umgebung und mit wenigstens einem Durchgangskanal, welcher sich zwischen dem Bodenbereich und dem Deckelbereich erstreckt. In dem Durchgangskanal ist ein Hülsenelement zur Abdichtung des Durchgangskanals gegenüber der Umgebung angeordnet.

Der Erfindung liegt damit das Problem zugrunde, ein Batteriegehäuse mit einem verbesserten Schutz bezüglich sich bei der Montage ergebender Karosseriebefestigungsstellen anzugeben.

Zur Lösung dieses Problems ist bei einem Batteriegehäuse der eingangs genannten Art erfindungsgemäß vorgesehen, dass in der Längsbohrung ein vom Schaft durchsetzter oder zu durchsetzender Dichtring positionsfest angeordnet ist, und dass zwischen dem Unterfahrschutz und dem Bodenabschnitt eine vom Schaft durchsetze Dichteinrichtung, die den Übergangsbereich des Bodenabschnitts zur Hülse hin abdichtet, angeordnet ist.

Erfindungsgemäß werden zwei voneinander getrennte und an unterschiedlichen Positionen vorgesehene respektive zwischen verschiedenen Bauteilen wirkende Dichtebenen realisiert. Eine erste Dichtebene wird innerhalb der Hülse realisiert, sie dichtet das Hülseninnere respektive die Längsbohrung zum Schaft des Befestigungselements, also der Verbindungsschraube hin ab. In der Längsbohrung ist hierfür ein vom Schaft in der Montagestellung durchsetzter Dichtring vorgesehen, der nach Einsetzen des Befestigungselements dicht am Schaft anliegt und verhindert, dass über die Längsbohrung Feuchtigkeit in den Bereich der Karosseriebefestigung gelangt. Gleichzeitig kommt dem Dichtring auch eine Fixierfunktion für die Verbindungsschraube zu, da es zur Dichtung leicht klemmend an der Schraube anliegt, so dass diese im Rahmen der Montage gegen ein Herausfallen fixiert ist.

Eine zweite Dichtebene ist im Bereich des Übergangs der Hülse zum Bodenabschnitt gegeben. Bei dem erfindungsgemäßen Batteriegehäuse wird gleichzeitig auch der Unterfahrschutz mittels des Befestigungselements fixiert, das heißt, dass im Unterfahrschutz eine entsprechende Durchbrechung vorgesehen ist, die mit der Längsbohrung der Hülse fluchtet. Das Befestigungselement durchgreift also mit dem Schaft die Unterfahrschutzdurchbrechung und die Längsbohrung, der Widerlagerkopf, also beispielsweise der Schraubenkopf, liegt an der Außenseite oder Unterseite des Unterfahrschutzes auf und presst diesen gegen die Hülse oder den Bodenabschnitt. Der Bodenabschnitt weist eine entsprechende Durchbrechung auf, so dass ein Durchgang zur Hülse respektive Längsbohrung gegeben ist. Erfindungsgemäß ist nun vorgesehen, dass auch der Übergang zwischen Bodenabschnitt und Hülse mittels einer Dichteinrichtung abgedichtet ist, das heißt, dass auch an dieser Position, wo sich ebenfalls eine zu schützende Öffnung respektive ein zu schützender Übergang befindet, eine gezielte Abdichtung realisiert ist, über die verhindert wird, dass Feuchtigkeit über diese Öffnung oder Verbindungsstelle in den Aufnahmeraum gelangen kann. Das heißt, dass die Befestigungseinrichtung in diesem Bereich zum Bodenabschnitt hin abgedichtet wird.

Durch die Integration dieser beiden separaten Dichtebenen ist demzufolge eine vollständige Abdichtung realisiert und zwar zum einen über den Dichtring in der Längsbohrung zur Karosserie hin, zum anderen über die Dichteinrichtung im Bodenbereich zwischen Hülse und Bodenabschnitt.

Der Dichtring selbst weist bevorzugt wenigstens einen radial nach innen vorspringenden Dichtabschnitt auf, der am im Dichtring eingesetzten Schaft dichtend anliegt. Über diesen ringförmigen, bevorzugt als umlaufende Dichtlippe oder Dichtrippe ausgeführten Dichtabschnitt ist eine sichere Dichtung zum Schaft und gleichzeitig eine Verklemmung bzw. Fixierung gegeben. Es können über die axiale Länge des Dichtrings aber auch zwei oder mehr solcher Dichtabschnitte oder Dichtlippen vorgesehen sein.

Der Dichtring ist bevorzugt positionsfest in der Längsbohrung angeordnet, so dass er also axial festgelegt ist und beim Einführen der Verbindungsschraube nicht bewegt werden kann. Diese positionsfeste Fixierung kann auf unterschiedliche Weise erfolgen. Zum einen kann der bevorzugt aus Kunststoff gefertigte Dichtring in der Längsbohrung über einen Klemmsitz oder mittels eines Klebemittels fixiert sein. Bei einer Klemmbefestigung ist der Außendurchmesser des Dichtrings bevorzugt etwas größer als der Innendurchmesser der Längsbohrung, so dass er durch eine Klemm- oder Presspassung axial festgelegt ist. Alternativ kann er auch mittels eines Klebemittels in der Hülse verklebt werden. Damit sichergestellt ist, dass der Dichtring auch bei einer separaten Montage desselben stets an der gleichen Position in der Längsbohrung sitzt, ist bevorzugt in der Längsbohrung eine axiale Anschlagschulter ausgebildet, auf der der Dichtring aufsitzt.

Eine alternative Ausgestaltung zum Einsetzen eines separaten Dichtrings sieht vor, den Dichtring an einer Hohlschraube, die mit einem Außengewinde in einen Innengewindeabschnitt der Hülse, den Deckelabschnitt gegen die Hülse verspannend verschraubt ist, anzuformen. Zum Fixieren des Deckels auf der Hülse respektive dem die Längsbohrung aufweisenden Hülsenbauteil dient eine Hohlschraube, die in ein Innengewinde der Hülse geschraubt wird, dabei den Deckel auf die Hülse pressend. Die Verbindungsschraube durchsetzt die Hohlschraube, die eine entsprechende Längsbohrung aufweist. Erfindungsgemäß ist nun der Dichtring unmittelbar und damit verliergesichert an der Hohlschraube angeformt, so dass er mit dem Einschrauben der Hohlschraube mitgenommen und zwangsläufig positioniert wird.

Der Dichtring selbst ist bevorzugt aus Kunststoff, worüber eine sehr gute Abdichtung zum Schaft erreicht werden kann. Darüber hinaus kann der Dichtring auf einfache Weise in einem Kunststoffspritzverfahren hergestellt werden, wenn er als separates Bauteil hergestellt wird. Gleichermaßen ist es auf einfache Weise möglich, ihn an der metallenen Hohlschraube verliersicher anzuspritzen, also ebenfalls in einem Kunststoffspritzvorgang, so dass sich ein Zwei-Komponenten-Bauteil ergibt.

Wie beschrieben befindet sich eine zweite Dichtebene im Bereich des Unterfahrschutzes, die den Übergang zwischen der Hülse und den Durchbrechungsrändern des Bodenabschnitts abdichtet. Zur Realisierung dieser Dichteinrichtung ist zweckmäßigerweise ein Trägerring mit einer Aufnahme für ein Dichtmittel vorgesehen, der am Unterfahrschutz anliegt, wobei das Dichtmittel am Bodenabschnitt und an der Hülse anliegt. Dieser Trägerring dient demzufolge als Träger für das Dichtmittel, das über diesen Trägerring, der als stabiles Bauteil einfach handhabbar ist, entsprechend positioniert werden kann. Hierüber wird die Montage vereinfacht.

Der Bodenabschnitt und die den Bodenabschnitt in einer Durchbrechung durchsetzende Hülse sind im Dichtbereich bevorzugt ebenflächig und bündig zueinander angeordnet, so dass sich eine Dichtebene ergibt, die das Dichtmittel quasi überbrückt. Je nach Geometrie der Durchbrechung, die zumeist rund ist, ergibt sich ein entsprechender, beispielsweise ringförmiger Spalt zwischen Hülse und Bodenabschnitt, der über das Dichtmittel abgedichtet wird, was sehr einfach möglich ist, wenn die entsprechenden Anlageflächen für das Dichtmittel planparallel sind und in einer Ebene liegen.

Als Dichtmittel selbst wird bevorzugt ein Klebemittel verwendet, das nach der Montage aushärtet. Ein besonderer Vorteil der Verwendung des Trägerrings, der in der Montagestellung am Unterfahrschutz abgestützt ist, besteht des Weiteren darin, dass letztlich nur eine Verklebung des Trägerrings über das Dichtmittel zur Hülse und zum Bodenabschnitt gegeben ist, der Unterfahrschutz selbst ist jedoch nicht verklebt. Daher ist der Unterfahrschutz auf einfache Weise auch demontierbar, da keine Klebeverbindungen aufzureißen sind. Alternativ zur Verwendung eines Klebemittels ist natürlich auch die Verwendung eines Dichtrings denkbar, der dann ebenfalls aus Kunststoff, einem Schaum oder einer dauerelastischen Dichtmasse ist, wobei der Dichtring hinreichen flexibel und elastisch ist.

Die Aufnahme am Trägerring ist bevorzugt eine Ringnut, was das präzisionsgenaue Einbringen des Dichtmittels ermöglicht, und andererseits im Falle eines pastösen oder fluiden, klebenden Dichtmittels verhindert, dass dieses zur Seite wegläuft.

Damit der Abstand, den der Trägerring zwischen Unterfahrschutz und Hülse/Bodenabschnitt überbrücken muss, nicht allzu groß ist, und um eine sichere Verschraubung des Unterfahrschutzes gegen die Hülse zu ermöglichen, weist der Unterfahrschutz bevorzugt eine zum Bodenabschnitt vorspringende rundliche Ausbiegung auf, auf der die Hülse und der Träger aufsitzen. Es ergibt sich demzufolge im Verbindungsbereich nur ein relativ schmaler Abstand, den der Trägerring als Träger des Dichtmittels überbrücken muss.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Batteriegehäuses in einer geschnittenen Teilansicht,
- Fig. 2: eine vergrößerte Darstellung des Bereichs II aus Fig. 1, und
- Fig. 3: eine vergrößerte Darstellung des Bereichs III aus Fig. 1.

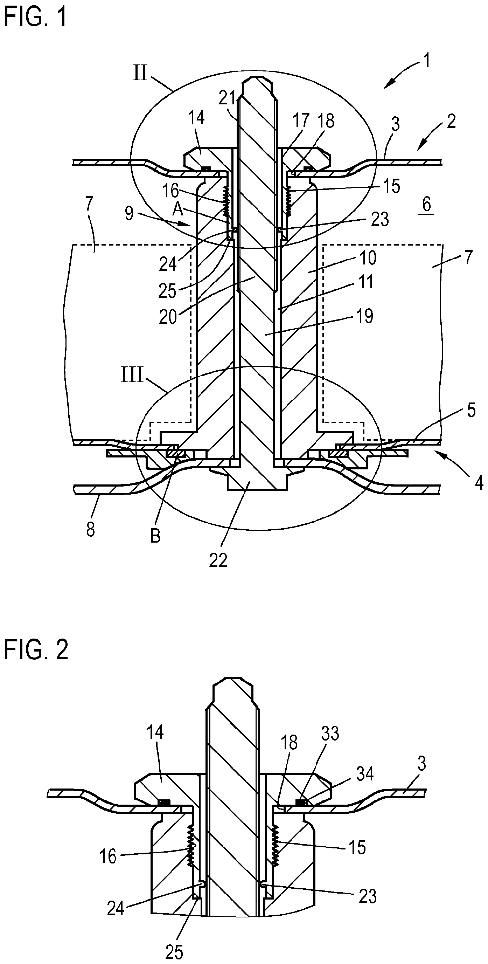

Fig. 1 zeigt ein erfindungsgemäßes Batteriegehäuse 1, umfassend einen Deckel 2, der einen Deckelabschnitt 3 bildet, sowie eine Batteriewanne 4, die einen Bodenabschnitt 5 bildet. Zwischen Deckel 2 und Batteriewanne 4 ist ein Aufnahmeraum 6 ausgebildet, in dem Energiespeicher 7 die hier nur gestrichelt dargestellt sind, angeordnet werden können. Der Bodenabschnitt 5 respektive die Batteriewanne 4 ist bodenseitig von einem Unterfahrschutz 8 übergriffen, wobei der Unterfahrschutz 8 fest unterhalb des Bodenabschnitts 5 angeordnet ist.

Das Batteriegehäuse 1 weist eine Mehrzahl an Befestigungseinrichtungen 9 auf, die im gezeigten Beispiel der Beabstandung des Deckels 2 und der Batteriewanne 4 voneinander sowie im gezeigten Beispiel auch der Befestigung des Unterfahrschutzes 8 dienen, andererseits aber auch der Verbindung des Batteriegehäuses 1 zu einer Tragstruktur, üblicherweise der Karosserie eines Fahrzeugs.

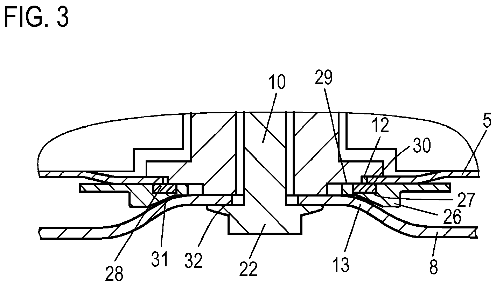

Die Befestigungseinrichtung 9 umfasst eine Hülse 10, wobei die Hülse 10 ein zylindrisches Bauteil sein kann, aber auch ein längliches Bauteil in Form eines Steges oder dergleichen. Die Höhe 10 weist eine Längsbohrung 11 auf, wobei im Falle einer Ausführung der Hülse 10 als länglicher Steg auch mehrere solcher Längsbohrungen 11 über die Steglänge ausgebildet sein können. Die Hülse 10 ist am Bodenabschnitt 5 angeordnet, dort beispielsweise angeschweißt oder angeklebt. Sie erstreckt sich von der Innenseite des Bodenabschnitts 5 zur Innenseite des Deckelabschnitts 3, wo sie abgestützt ist. Der Bodenabschnitt 5 weist eine Durchbrechung 12 auf, durch die die Hülse 10, siehe Fig. 3, greift. Unterhalb der Hülse verläuft der Unterfahrschutz 8, der eine beispielsweise rundliche Ausbiegung 13 aufweist, die zum Bodenabschnitt 5 respektive zur Hülse 10 vorspringt, und die in der Montagestellung fest an der Stirnfläche der Hülse 10 anliegt.

Die Befestigungseinrichtung 9 umfasst des Weiteren eine Hohlschraube 14, die mit einem Außengewinde 15 in einen Innengewindeabschnitt 16 der Hülse 10 eingeschraubt wird, siehe hierzu auch Fig. 2. Die Abdichtung der Verbindung des Außengewindes 15 und des Innengewindeabschnitts 16 erfolgt über eine geeignete Gewindeabdichtung, wobei sicherzustellen ist, dass das Eindrehmoment in einem gleichbleibenden Bereich liegt. Die Hohlschraube 14 weist eine Längsbohrung 17 auf, die mit der Längsbohrung 11 der Hülse 10 fluchtet. In der Montagestellung wird der Deckel 2 respektive der Deckelabschnitt 3, der, siehe Fig. 2, eine entsprechende Durchbrechung 18 aufweist, durch die die Hohlschraube 14 geführt wird, fest gegen die Hülse 10 verschraubt.

Weiterhin weist die Befestigungseinrichtung 9 ein längliches Befestigungselement 19, üblicherweise in Form einer Schraube, auf, mit einem Schraubenschaft 20, der beispielsweise einen Gewindeabschnitt 21 aufweist, mit dem die Schraube in eine Karosserieöffnung eingesetzt oder eingeschraubt wird. Des Weiteren ist ein Widerlagerkopf 22, also ein Schraubenkopf, vorgesehen, der in der Montagestellung, siehe unter anderem Fig. 3, außenseitig am Unterfahrschutz 8 im Bereich der Ausbiegung 13 anliegt und diese gegen die Hülse 10 spannt. Zur Montage wird, nachdem die diversen Befestigungseinrichtungen 9 in die Batteriewanne 4 eingesetzt, und die Energiespeichermodule 7 eingebracht wurden, der Deckel 2 aufgesetzt und mit den Hohlschrauben 14 befestigt. Anschließend wird der Unterfahrschutz 8 angesetzt und werden die Befestigungselemente 19 eingeführt und sodann karosserieseitig verschraubt.

Um die entsprechenden Verschraubungs- oder Befestigungspositionen bzw. Übergänge zueinander abzudichten, um zu verhindern, dass beispielsweise Feuchtigkeit in den Bereich der Karosserieverschraubung, oder aber in den Aufnahmeraum 6 gelangt, sind zwei separate Dichtebenen A und B realisiert, wie detailliert in den Figuren 2 und 3 dargestellt ist.

Die Dichtebene A ist mittels eines Dichtrings 23 realisiert, der einen radial nach innen vorspringenden Dichtabschnitt 24 beispielsweise in Form einer Dichtlippe aufweist, welcher Dichtabschnitt in der Montagestellung dicht am Schaft 20 bzw. am Gewindeabschnitt 21 anliegt. Der Dichtring 23 liegt axial an einer Anschlagschulter 25 der Hülse 10 an. Der Dichtring 23 kann als separates Bauteil über einen Klemmsitz in der Längsbohrung 11 fixiert sein, er kann aber auch eingeklebt sein. Besonders bevorzugt jedoch ist der aus Kunststoff gefertigte Dichtring 23 verliersicherer an die Hohlschraube 14 in axialer Verlängerung des das Außengewinde 16 aufweisenden Gewindeabschnitts angeformt respektive angespritzt, das heißt, dass die Hohlschraube 14 ein Zwei-Komponenten-Bauteil ist.

Beim Einschieben des Befestigungselements 19, also der Verbindungsschraube, wird diese automatisch durch den Dichtring 23 geschoben, so dass sich der Dichtabschnitt 24 mit Erreichen der Endstellung dicht an den Schaft 20 anlegt, gleichzeitig ist die Verbindungsschraube im Dichtring auch klemmfixiert.

Wie Fig. 2 ferner zeigt, ist die Hohlschraube 14 mit einer Ringnut 33 versehen, in der ein Dichtmittel 34, z.B. ein Dichtring oder eine gegebenenfalls dauerelastische Dichtmasse eingebracht ist. Über dieses Dichtmittel wird eine Abdichtung der eingeschraubten Hohlschraube 14 zum Deckelabschnitt 3 hin erreicht.

Eine zweite Dichtebene B ist im Bereich des Unterfahrschutzes 8 ausgebildet, siehe Fig. 3. Vorgesehen ist ein Trägerring 26 mit einer nutförmigen Aufnahme 27, in der ein Dichtmittel 28 aufgenommen ist, beispielsweise ein pastöses klebendes Dichtmittel. Dieses Dichtmittel 28 wird beim Festziehen der Befestigungselemente 19, wenn der Widerlagerkopf 22 fest gegen den Unterfahrschutz 8 gespannt wird und dieser gegen die Hülse 10, gegen die Außenseite des Bodenabschnitts 5 im Bereich der Durchbrechung 12, aber auch gegen die Stirnfläche 29 der Hülse 10 gedrückt, wobei die Stirnfläche 29 der Hülse 10 bündig mit der Außenfläche 30 des Bodenabschnitts 5 ist, so dass sich eine homogene Dicht- oder Anlageebene ergibt. Hierüber wird demzufolge in der Montagestellung der Spalt zwischen Hülse 10 und Bodenabschnitt 5 abgedichtet.

Der Trägerring 26, bevorzugt ein Kunsstoffbauteil, weist eine entsprechende Zentriervertiefung 31 auf, die näherungsweise formkompatibel zur Geometrie der Ausbiegung 13 ist, so dass der Trägerring auf einfache Weise an respektive auf der Ausbiegung 13 positioniert werden kann. Er wird bereits mit dem eingebrachten Dichtmittel 28 positioniert, so dass bei Ansetzen des Unterfahrschutzes 8 an den Bodenabschnitt 5 das Dichtmittel 28 automatisch in Anlage an die Dichtflächen gelangt, gegen die es dann beim Festziehen der Befestigungselemente 19 gedrückt wird. Hierüber wird gleichzeitig auch eine definierte Verklebungs- und damit Abdichtbreite sichergestellt, da das Dichtmittel 28 in der Aufnahmenut 27 verdrückt wird. Alternativ zu einem pasteusen klebenden Dichtmittel 28 kann natürlich auch ein Dichtring verwendet werden.

Dadurch, dass der Trägerring 26 als Träger für das Dichtmittel 28, bevorzugt das pasteuse klebende Dichtmittel 28, dient, der Trägerring 26 jedoch lediglich auf dem Unterfahrschutz 8 aufsitzt, wird demzufolge der Unterfahrschutz 8 nicht selbst verklebt, so dass er ohne Weiteres von dem Bodenabschnitt 5 auch wieder gelöst werden kann.

Der Unterfahrschutz 8 selbst liegt, siehe Fig. 3, fest und dicht an der Stirnfläche der Hülse 10 an, so dass sich auch hier eine Abdichtung ergibt, da der Widerlagerkopf 22 die Durchbrechung 32 im Unterfahrschutz 8 großflächig übergreift und verschließt, wie auch der Trägerring 26 über den Unterfahrschutz 8 fest gegen den Bodenabschnitt 5 gedrückt wird, wobei das Dichtmittel 28 verdrückt wird.

## Patentansprüche

1. Batteriegehäuse umfassend einen Deckelabschnitt (3) und einen Bodenabschnitt (5), die einen Aufnahmeraum (6) für einen oder mehrere Energiespeicher (7) begrenzen, sowie einen Unterfahrschutz (8), der unterhalb des Bodenabschnitts (5) angeordnet ist, wobei der Deckelabschnitt (3), der Bodenabschnitt (5) und der Unterfahrschutz (8) über eine oder mehrere Befestigungseinrichtungen (9) miteinander verbunden sind, wobei die oder jede Befestigungseinrichtung (9) eine zwischen Deckelabschnitt (3) und Bodenabschnitt (5) angeordnete Hülse (10) mit einer Längsbohrung (11) sowie ein durch die Längsbohrung (11) geführtes Befestigungselement (19) mit einem Schaft (20) und einem an einer Seite ausgebildeten Widerlagerkopf (22) umfasst, **dadurch gekennzeichnet,**
**dass** in der Längsbohrung (11) ein vom Schaft (20) durchsetzter oder zu durchsetzender Dichtring (23) angeordnet ist, und dass zwischen dem Unterfahrschutz (8) und dem Bodenabschnitt (5) eine vom Schaft (20) durchsetzte Dichteinrichtung, die den Übergangsbereich des Bodenabschnitts (5) zur Hülse (10) hin abdichtet, angeordnet ist.

2. Batteriegehäuse nach Anspruch 1,
**dadurch gekennzeichnet,**
**dass** der Dichtring (23) wenigstens einem radial nach innen vorspringenden Dichtabschnitt (24), der am im Dichtring (23) eingesetzten Schaft (20) dichtend anliegt, aufweist.

3. Batteriegehäuse nach Anspruch 2,
**dadurch gekennzeichnet,**
**dass** der Dichtabschnitt (24) als umlaufende Dichtlippe ausgeführt ist.

4. Batteriegehäuse nach einem der vorangehenden Ansprüche,
**dadurch gekennzeichnet,**
**dass** der Dichtring (23) in der Längsbohrung (11) über einen Klemmsitz oder mittels eines Klebemittels fixiert ist.

5. Batteriegehäuse nach einem der Ansprüche 1 bis 3,
**dadurch gekennzeichnet,**
**dass** der Dichtring (23) an einer Hohlschraube (14), die mit einem Außengewinde (15) in einen Innengewindeabschnitt (16) der Hülse (10), den Deckelabschnitt (3) gegen die Hülse (10) verspannend, geschraubt ist, angeformt ist.

6. Batteriegehäuse nach Anspruch 5,
**dadurch gekennzeichnet,**
**dass** an der Hohlschraube eine Ringnut (33), in der ein Dichtmittel (34) aufgenommen ist, das zum Deckelabschnitt (3) hin abdichtet, ausgebildet ist.

7. Batteriegehäuse nach einem der vorangehenden Ansprüche,
**dadurch gekennzeichnet,**
**dass** in der Längsbohrung (11) eine axialer Anschlagschulter (25) ausgebildet ist, auf der der Dichtring (23) aufsitzt.

8. Batteriegehäuse nach einem der vorangehenden Ansprüche,
**dadurch gekennzeichnet,**
**dass** der Dichtring (23) aus Kunststoff ist.

9. Batteriegehäuse nach einem der vorangehenden Ansprüche,
**dadurch gekennzeichnet,**
**dass** die Dichteinrichtung einen Trägerring (26) mit einer Aufnahme (27) für ein Dichtmittel (28) aufweist, der am Unterfahrschutz (8) anliegt, wobei das Dichtmittel (28) am Bodenabschnitt (5) und an der Hülse (10) anliegt.

10. Batteriegehäuse nach Anspruch 9,
**dadurch gekennzeichnet,**
**dass** der Bodenabschnitt (5) und die den Bodenabschnitt (5) in einer Durchbrechung (12) durchsetzende Hülse (10) im Dichtbereich ebenflächig und bündig zueinander angeordnet sind.

11. Batteriegehäuse nach Anspruch 9 oder 10,
**dadurch gekennzeichnet,**
**dass** das Dichtmittel (28) ein Klebemittel oder ein Dichtring ist.

12. Batteriegehäuse nach einem der Ansprüche 9 bis 11,
**dadurch gekennzeichnet,**
**dass** die Aufnahme (27) eine Ringnut ist.

13. Batteriegehäuse nach einem der Ansprüche 9 bis 12,
**dadurch gekennzeichnet,**
**dass** der Unterfahrschutz (8) eine zum Bodenabschnitt (5) hervorspringende rundliche Ausbiegung (13) aufweist, auf der die Hülse (10) und der Trägerring (26) aufsitzen.

## Claims

1. Battery housing comprising a cover section (3) and a base section (5), which delimit a receiving space (6) for one or more energy stores (7), and an underride guard (8), which is arranged underneath the base section (5), wherein the cover section (3), the base section (5) and the underride guard (8) are connected to one another by one or more fastening devices (9), wherein the or each fastening device (9) comprises a sleeve (10) arranged between a cover section (3) and base section (5) with a longitudinal bore (11) and a fastening element (19) guided through the longitudinal bore (11) with a shaft (20) and an abutment head (22) formed on one side,
**characterised in that**
a sealing ring (23) through which the shaft (20) passes or is to pass is arranged in the longitudinal bore (11), and **in that** a sealing device through which the shaft (20) passes and which seals the transitional region of the base section (5) towards the sleeve (10) is arranged between the underride guard (8) and the base section (5).

2. Battery housing according to claim 1,
**characterised in that**
the sealing ring (23) has at least one radially inwardly projecting sealing section (24), which bears in a sealing manner on the shaft (20) inserted into the sealing ring (23).

3. Battery housing according to claim 2,
**characterised in that**
the sealing section (24) is configured as a circumferential sealing lip.

4. Battery housing according to any of the preceding claims,
**characterised in that**
the sealing ring (23) is fixed in the longitudinal bore (11) by means of a clamping fit or by means of an adhesive.

5. Battery housing according to any of claims 1 to 3,
**characterised in that**
the sealing ring (23) is formed on a banjo bolt (14), which is screwed by means of an external thread (15) into an internally threaded section (16) of the sleeve (10), bracing the cover section (3) against the sleeve (10).

6. Battery housing according to claim 5,
**characterised in that**
on the banjo bolt an annular groove (33) is formed, in which a sealing means (34) is accommodated which seals towards the cover section (3).

7. Battery housing according to any of the preceding claims,
**characterised in that**
in the longitudinal bore (11) an axial stop shoulder (25) is formed on which the sealing ring (23) is seated.

8. Battery housing according to any of the preceding claims,
**characterised in that**
the sealing ring (23) is made of plastic.

9. Battery housing according to any of the preceding claims,
**characterised in that**
the sealing device has a carrier ring (26) with a receiving area (27) for a sealing means (28), which bears on the underride guard (8), wherein the sealing means (28) bears on the base section (5) and on the sleeve (10).

10. Battery housing according to claim 9,
**characterised in that**
the base section (5) and the sleeve (10) which passes through the base section (5) in an opening (12) are arranged in the sealing region so as to be flat and flush with one another.

11. Battery housing according to claim 9 or 10,
**characterised in that**
the sealing means (28) is an adhesive or a sealing ring.

12. Battery housing according to any of claims 9 to 11 **characterised in that**
the receiving area (27) is an annular groove.

13. Battery housing according to any of claims 9 to 12,
**characterised in that**
the underride guide (8) has a rounded bend (13) which projects towards the base section (5) and on which the sleeve (10) and the carrier ring (26) are seated.

## Revendications

1. Boîtier de batterie comprenant une section de couvercle (3) et une section de fond (5) qui délimitent un espace de logement (6) pour un ou plusieurs accumulateurs d'énergie (7), ainsi qu'une protection anti-encastrement (8), qui est disposée sous la section de fond (5), dans lequel la section de couvercle (3), la section de fond (5) et la protection anti-encastrement (8) sont connectées entre elles par un ou plusieurs dispositifs de fixation (9), dans lequel le ou chaque dispositif de fixation (9) comprend une douille (10) disposée entre la section de couvercle (3) et la section de fond (5) avec un alésage longitudinal (11), ainsi qu'un élément de fixation (19) guidé à travers l'alésage longitudinal (11) avec une tige (20) et une tête de butée (22) formée sur un côté,
**caractérisé en ce**
**qu'**une bague d'étanchéité (23) traversée ou à traverser par la tige (20) est disposée dans l'alésage longitudinal (11), et **en ce qu'**un dispositif d'étanchéité traversé par la tige (20) est disposé entre la protection anti-encastrement (8) et la section de fond (5), et assure l'étanchéité de la zone de transition de la section de fond (5) vers la douille (10).

2. Boîtier de batterie selon la revendication 1,
**caractérisé en ce**
**que** la bague d'étanchéité (23) présente au moins une section d'étanchéité (24) faisant saillie radialement vers l'intérieur, qui repose de manière étanche contre la tige (20) insérée dans la bague d'étanchéité (23).

3. Boîtier de batterie selon la revendication 2,
**caractérisé en ce**
**que** la section d'étanchéité (24) est réalisée sous forme de lèvre d'étanchéité circonférentielle.

4. Boîtier de batterie selon l'une quelconque des revendications précédentes, **caractérisé en ce**
**que** la bague d'étanchéité (23) est fixée dans l'alésage longitudinal (11) par un ajustement serré ou au moyen d'un adhésif.

5. Boîtier de batterie selon l'une quelconque des revendications 1 à 3,
**caractérisé en ce**
**que** la bague d'étanchéité (23) est formée sur une vis creuse (14), qui est vissée par un filetage extérieur (15) dans une section de filetage intérieur (16) de la douille (10), en serrant la section de couvercle (3) contre la douille (10).

6. Boîtier de batterie selon la revendication 5,
**caractérisé en ce**
**qu'**une rainure annulaire (33), dans laquelle est reçu un moyen d'étanchéité (34) qui assure l'étanchéité vers la section de couvercle (3), est formée sur la vis creuse.

7. Boîtier de batterie selon l'une quelconque des revendications précédentes, **caractérisé en ce**
**qu'**un épaulement de butée axial (25) est formé dans l'alésage longitudinal (11), sur lequel la bague d'étanchéité (23) repose.

8. Boîtier de batterie selon l'une quelconque des revendications précédentes, **caractérisé en ce**
**que** la bague d'étanchéité (23) est en matière plastique.

9. Boîtier de batterie selon l'une quelconque des revendications précédentes, **caractérisé en ce**
**que** le dispositif d'étanchéité présente une bague de support (26) avec un logement (27) pour un moyen d'étanchéité (28), qui repose contre la protection anti-encastrement (8), dans lequel le moyen d'étanchéité (28) repose contre la section de fond (5) et contre la douille (10).

10. Boîtier de batterie selon la revendication 9,
**caractérisé en ce**
**que** la section de fond (5) et la douille (10) traversant la section de fond (5) dans une perforation (12) sont disposées à plat et à ras l'un de l'autre dans la zone d'étanchéité.

11. Boîtier de batterie selon la revendication 9 ou 10,
**caractérisé en ce**
**que** le moyen d'étanchéité (28) est un adhésif ou une bague d'étanchéité.

12. Boîtier de batterie selon l'une quelconque des revendications 9 à 11,
**caractérisé en ce**
**que** le logement (27) est une rainure annulaire.

13. Boîtier de batterie selon l'une quelconque des revendications 9 à 12,
**caractérisé en ce**
**que** la protection anti-encastrement (8) présente une courbure arrondie (13) faisant saillie vers la section de fond (5), sur laquelle reposent la douille (10) et la bague de support (26).
